# EUROPÄISCHE PATENTANMELDUNG

(11) **EP 4 219 351 A2**
(43) Veröffentlichungstag der Anmeldung: **02.08.2023**
(21) Anmeldenummer: 22215950.1
(22) Anmeldetag: 28.10.2019
(51) Int. Cl.: B65G 43/08, B65G 47/61, B65G 1/137, B65G 47/51

(54) **SPEICHERVORRICHTUNG ZUM EINSPEICHERN VON TRANSPORTEINHEITEN**

(30) Priorität: 31.10.2018 CH 13282018
(62) Teilanmeldung aus: 19797223.5
(71) Anmelder: Ferag AG, 8340 Hinwil ZH (CH)
(72) Erfinder: Altwegg, Heinz, 8320 Fehraltorf (CH)
(74) Vertreter: Rentsch Partner AG

(57) **Zusammenfassung**

Die vorliegende Anmeldung bezieht sich auf eine Speichervorrichtung (1, 1') zum Einspeichern von Transporteinheiten (3, 3', 3", 3a", 36), die eine Mehrzahl von Transporteinheiten (3, 3', 3", 3a", 36), eine Mehrzahl von Speicherstrecken (1 2, 1 2a'-1 2g') welche eingerichtet sind hängende Transporteinheiten (3, 3', 3", 3a", 36-39, 310-312) zu speichern, eine Zuführstrecke (11,11') und/oder eine Wegführstrecke (13,13') in der die Transporteinheiten (3, 3', 3", 3a", 36) mit veränderlichem oder mit festem Abstand zueinander förderbar sind, umfasst. Die Speichervorrichtung (1, 1') umfasst zudem eine Führungsvorrichtung (15.12-1 5.62), die eingerichtet ist die Transporteinheiten (3, 3', 3", 3a", 36-39, 310-312) zu stabilisieren, wobei durch die Stabilisierung der Transporteinheiten (3, 3', 3", 3a", 36-39, 310-312) diese in einer Bewegung durch die Führungsvorrichtung (15.12-15.62) dämpfbar sind, wobei die Führungsvorrichtung (15.12-15.62) mindestens einen Begrenzungskörper (1 5.22a, 1 5 1 5.22b, 1 5.62a, 1 5.62b) umfasst, welcher eingerichtet ist, eine Bewegung der Transporteinheiten (3, 3', 3", 3a", 36-39, 310-312), vorzugsweise eine Schwingbewegung, horizontal quer oder längs zur Förderrichtung (F), zu begrenzen.

## Beschreibung

### GEBIET DER ERFINDUNG

Die vorliegende Erfindung bezieht sich auf das Gebiet der Intralogistik und betrifft eine Speichervorrichtung zum Einspeichern von Transporteinheiten und ein Verfahren zum Betrieb einer solchen Speichervorrichtung.

### HINTERGRUND DER ERFINDUNG

In der Intralogistik kommen verschiedene Vorrichtungen zum Fördern von Transportgütern zum Einsatz, wobei die Transportgüter typischerweise mit geeigneten Transporteinheiten gefördert werden. Ein Aspekt in der Intralogistik betrifft dabei das Einspeichern von Transporteinheiten in einen oder mehreren Speichern. Insbesondere kann der Speicher ein Zwischenspeicher sein, in welchen Transporteinheiten für eine bestimmte Zeit eingespeichert und bei Bedarf zur weiteren Förderung wieder ausgespeichert werden. Mit geeigneten Zwischenspeichern können zum Beispiel Sortiervorgänge vorgenommen werden, was insbesondere bei der Kommissionierung von Waren eine wichtige Rolle spielt.

Je nach Anforderung können die Transporteinheiten in einer Fördervorrichtung mit festem Abstand zueinander oder mit veränderlichem Abstand, z.B. in Pufferstrecken, zueinander gefördert werden. Für die Erhöhung der Förderleistung und/oder der Kommissionierleistung ist es dabei erwünscht, eine möglichst optimale Auslastung der Fördervorrichtung zu erreichen. Nebst einer platzsparenden Anordnung der Transporteinheiten mit kleinstmöglichem Abstand zueinander stellt eine möglichst hohe Ausnutzung des verfügbaren Platzes in einem Speicher ein wichtiger Faktor zur Optimierung der Auslastung dar.

Ein Beispiel einer Förderanlage mit Tragetaschen, bei welcher der Platzbedarf der Tragetaschen berücksichtigt wird, wird in der DE102010053590 A1 beschrieben. Die Tragetasche umfasst eine Aufhängestelle für einen Taschenbeutel zur Aufnahme von Fördergut, wobei der Taschenbeutel eine Abmessung aufweist, die in einem leeren Zustand einen Kleinstwert und in einem mit dem Fördergut beladenen Zustand einen Grösstwert einnimmt. Die Tragetasche umfasst weiter einen zwischen der Aufhängestelle und dem Taschenbeutel verschwenkbaren Abstandshalter, der in eine stabile Ruhestellung oder in eine stabile Arbeitsstellung positionierbar ist, wobei der Abstandshalter derart ausgebildet ist, dass er in seiner Arbeitsstellung zur Anlage mit einer nachfolgenden Tragetasche gelangt und derart bemessen ist, dass sich ein in der Horizontalen gemessener Abstand einstellt. Die Ausgestaltung der Tragetasche mit einem einstellbaren Abstandshalter gestattet eine optimierte Platzausnutzung sowohl beim Aufstauen von leeren Tragetaschen bei in der Ruhestellung befindlichen Abstandshaltern als auch beim Aufstauen von beladenen Tragetaschen bei in der Arbeitsstellung befindlichen Abstandshaltern.

### DARSTELLUNG DER ERFINDUNG

Es ist daher eine Aufgabe der Erfindung, eine Speichervorrichtung und ein Verfahren zum Betrieb einer solchen Speichervorrichtung bereitzustellen, welche den Stand der Technik bezüglich des Einspeicherns von Transporteinheiten mindestens teilweise verbessern.

Diese Aufgabe wird durch die Merkmale der unabhängigen Ansprüche gelöst. Vorteilhafte Ausgestaltungen der Erfindung sind in den abhängigen Ansprüchen und in der vorliegenden Beschreibung und den Figuren gegeben.

Die Erfindung betrifft eine Speichervorrichtung zum Einspeichern von Transporteinheiten, umfassend eine Mehrzahl von Transporteinheiten, eine Mehrzahl von Speicherstrecken, welche eingerichtet sind, Transporteinheiten zu speichern, eine Zuführstrecke, welche über jeweils eine erste Weiche an die Speicherstrecken angeschlossen ist, eine an der Zuführstrecke angeordnete Messvorrichtung, welche eingerichtet ist, jeweils eine Ausdehnung einer Transporteinheit zu ermitteln, und eine Steuerung, welche mit der Messvorrichtung und den ersten Weichen verbunden ist. Die Steuerung ist eingerichtet, anhand der von der Messvorrichtung ermittelten Ausdehnung der Transporteinheit eine Speicherstrecke zum Einspeichern der Transporteinheit auszuwählen.

Die Erfindung bietet den Vorteil, dass das Einspeichern der Transporteinheiten in die Speicherstrecken auf die Ausdehnung der einzuspeichernden Transporteinheiten angepasst werden kann. Da die Ausdehnung der Transporteinheiten vor dem Einspeichern durch die Messvorrichtung ermittelt wird, muss z.B. nicht eine bestimmte Durchschnittsausdehnung oder eine bestimmte Maximalausdehnung der Transporteinheiten angenommen werden, um das Einspeichern der Transporteinheiten in die Speicherstrecken zu steuern.

Mit der Annahme einer Durchschnittsausdehnung kann zwar eine gewisse Durchschnittsauslastung der Speicherstrecken ermöglicht, aber z.B. nicht verhindert werden, dass versucht wird, Transporteinheiten mit einer grossen Ausdehnung in Förderrichtung in Speicherstrecken einzuspeichern, in welchen der Platz für diese Transporteinheiten nicht ausreichend ist. Bei einem solchen Vorgang kann es dann vorkommen, dass eine betreffende Transporteinheit nicht in eine Speicherstrecke eingespeichert werden kann und sich stattdessen in einer ersten Weiche, welche die Zuführstrecke mit der Speicherstrecke verbindet, verfängt.

Die Annahme einer Maximalausdehnung der Transporteinheiten kann zwar in dieser Hinsicht Abhilfe leisten, indem stets sichergestellt wird, dass nur in diejenigen Speicherstrecken eingespeichert wird, in welchen Transporteinheiten mit der angenommenen Maximalausdehnung Platz hätten. Dies kann jedoch typischerweise dazu führen, dass zu viel Platz in den Speicherstrecken freigehalten wird, was sich nachteilhaft auf die Auslastung auswirkt.

Da für jede einzuspeichernde Transporteinheit vor dem Einspeichern deren Ausdehnung ermittelt wird und die Speicherstrecke zum Einspeichern der Transporteinheit anhand der ermittelten Ausdehnung dieser Transporteinheit ausgewählt wird, kann die Auslastung der Speicherstrecken fortlaufend optimiert werden. Jede Transporteinheit kann daher dynamisch und selektiv eingespeichert werden, d.h. indem für jede Transporteinheit die zu diesem Zeitpunkt optimalste Speicherstrecke, z.B. diejenige mit einem geeigneten freien Platz, ausgewählt werden kann. Die ermittelte Ausdehnung, anhand welcher die Steuerung eine Speicherstrecke auswählt, kann eine Ausdehnung in Förderrichtung und/oder quer zur Förderrichtung sein.

Die Messvorrichtung umfasst vorzugsweise eine Kommunikationseinheit, welche ausgelegt ist, mit der Steuerung eine Kommunikationsverbindung einzugehen, um die ermittelten Ausdehnungen an die Steuerung übermitteln zu können. Die Kommunikationsverbindung kann in einer Ausgestaltung drahtlos ausgebildet sein.

In einer Ausgestaltung ist die Messvorrichtung eingerichtet, die Ausdehnung einer Transporteinheit in Förderrichtung zu ermitteln.

Die Messvorrichtung umfasst vorzugsweise einen Sensor, welcher ausgelegt ist, die Ausdehnung der Transporteinheiten zu messen. Der Sensor kann in Ausgestaltungen ein optischer Sensor, z.B. eine Kamera, eine Lichtschranke, ein Lichtvorhang, ein Lichtgitter, ein Lichttaster o.ä., sein.

Insbesondere kann der optische Sensor ein Reflexionslichttaster sein.

Die Lichtschranke kann z.B. eine Einweg-Lichtschranke oder eine Reflexionslichtschranke sein.

Der Sensor kann in bestimmten Ausgestaltungen als mechanischer oder elektromagnetischer Sensor ausgebildet sein, welcher durch mechanischen oder elektromagnetischen Kontakt mit der Transporteinheit deren Ausdehnung ermitteln kann.

In einer Ausgestaltung umfasst die Messvorrichtung eine Mehrzahl von optischen Sensoren, z.B. Lichtschranken oder Lichttaster, welche in vertikaler Richtung übereinander angeordnet sind. Dies hat den Vorteil, dass die Ausdehnung einer Transporteinheit auf unterschiedlichen Höhen der Transporteinheit gemessen werden kann. Insbesondere bei Transporteinheiten mit einer von der Höhe abhängigen variierenden Ausdehnung in Förderrichtung und/oder quer zur Förderrichtung, z.B. bei Transporteinheiten umfassend sackförmige Taschen, kann die variierende Ausdehnung der Transporteinheit vorteilhafterweise durch die Mehrzahl von Sensoren gemessen werden.

Alternativ oder in Ergänzung kann die Messvorrichtung eine Mehrzahl von optischen Sensoren, z.B. Lichtschranken oder Lichttaster, umfassen, welche in horizontaler Richtung nebeneinander angeordnet sind. Insbesondere kann die Messvorrichtung eine Mehrzahl von optischen Sensoren umfassen, welche eine Matrix ausbildend angeordnet sind. Durch Matrixanordnung können zusätzlich zur Ermittlung der Ausdehnung der Transporteinheit weitere geometrische Eigenschaften der Transporteinheit, wie z.B. die räumliche Lage, ermittelt werden. Zum Beispiel kann damit eine Neigung einer Tasche ermittelt werden und diese Neigung bei der Ermittlung der Ausdehnung der Transporteinheit bzw. der Tasche mitberücksichtigt werden.

In einer Ausgestaltung umfasst die Messvorrichtung eine Führungsvorrichtung, welche eingerichtet ist, eine Transporteinheit bei der Ermittlung der Ausdehnung durch die Messvorrichtung zu stabilisieren. Durch die Stabilisierung der Transporteinheit, z.B. durch Reduktion von Schwingbewegungen einer hängenden Transporteinheit, kann die Messgenauigkeit bei der Ermittlung der Ausdehnung der Transporteinheit erhöht werden. Insbesondere kann die Führungsvorrichtung eine Transporteinheit in einer Bewegung, z.B. in einer Schwingbewegung, dämpfen.

Vorzugsweise umfasst die Führungsvorrichtung mindestens einen Begrenzungskörper, welcher eingerichtet ist, eine Bewegung der Transporteinheit, vorzugsweise eine Schwingbewegung, vorzugsweise horizontal quer oder längs zur Förderrichtung zu begrenzen. Durch die Begrenzung der Bewegung der Transporteinheit kann die Stabilisierung der Transporteinheit verbessert werden.

In einer Ausgestaltung umfasst die Führungsvorrichtung zwei Begrenzungskörper, welche einander gegenüberliegend angeordnet sind und eingerichtet sind, die Bewegung der Transporteinheit in beide horizontale Richtungen quer zur Förderrichtung zu begrenzen.

Die Begrenzungskörper können jeweils gegenüberliegend seitlich der Zuführstrecke angeordnet sein.

In einer Ausgestaltung ist die Führungsvorrichtung eingerichtet, die Transporteinheit in Förderrichtung mitzubewegen. Vorteilhafterweise kann die Führungsvorrichtung die Transporteinheit, deren Ausdehnung durch die Messvorrichtung zu ermitteln ist, gleichzeitig stabilisieren und in Förderrichtung mitbewegen.

In einer Ausgestaltung umfasst die Führungsvorrichtung einen Antrieb, welcher eingerichtet ist, die Führungsvorrichtung zum Mitbewegen der Transporteinheit anzutreiben.

In einer Ausgestaltung umfasst der Begrenzungskörper ein über mindestens zwei Rollen umlaufendes Band, welches vorzugsweise eingerichtet ist, eine Bewegung der Transporteinheit quer zum Band zu begrenzen.

In einer Ausgestaltung ist das Band eingerichtet, die Transporteinheit durch die umlaufende Bewegung über die Rollen in Förderrichtung zu fördern oder die Förderbewegung zu unterstützen. Zum Beispiel kann das Band auf einem Teilstück des Bandes an einer Fläche der Transporteinheit, z.B. einer seitlichen Wand einer Tasche, anliegen und die Transporteinheit in Förderrichtung mitbewegen.

In einer Ausgestaltung ist das Band eingerichtet, durch die umlaufende Bewegung über die Rollen mit der Transporteinheit mitzulaufen. Zum Beispiel kann das Band auf einem Teilstück des Bandes an einer Fläche der Transporteinheit, z.B. einer seitlichen Wand einer Tasche, anliegen und mit der Transporteinheit in Förderrichtung mitlaufen.

Vorzugsweise läuft das Teilstück des Bandes parallel zur Förderrichtung der Transporteinheit.

In einer Ausgestaltung ist der Antrieb eingerichtet, mindestens eine der Rollen anzutreiben. Über das Antreiben der Rollen kann das Band angetrieben werden. Der Antrieb hat den Vorteil, dass die Führungsvorrichtung die Transporteinheit im Bereich der Messvorrichtung fördertechnisch übernehmen und durch die Messvorrichtung hindurch fördern kann.

Durch Anpassung der Rotationsgeschwindigkeit der Rollen über den Antrieb kann die Fördergeschwindigkeit der Transporteinheit, welche vom Band der Führungsvorrichtung mitbewegt wird, an Anforderungen der Messvorrichtung angepasst werden.

Zum Beispiel kann die Förderung der Transporteinheit im Bereich der Messvorrichtung verlangsamt werden, um eine zuverlässige Messung der Ausdehnung der Transporteinheit durch einen optischen Sensor der Messvorrichtung zu ermöglichen oder zu verbessern.

Alternativ können die Rollen antriebsfrei rotierbar bzw. das Band freilaufend über die Rollen gelagert sein. Aufgrund der freien Lagerung kann das Band mit einer sich durch die Messvorrichtung bewegenden Transporteinheit mitlaufen und die Transporteinheit stabilisieren, ohne diese anzutreiben.

Unter «Band» können im Zusammenhang mit der vorliegenden Erfindung Objekte wie z.B. Riemen, Kette, Seil, Teppich etc. fallen.

Das Band kann die Transporteinheit durch direktes Anliegen an der Transporteinheit stabilisieren und/oder in Förderrichtung mitbewegen. Alternativ kann das Band eine Stabilisierungsstruktur und/oder eine Mitnehmerstruktur aufweisen. Die Stabilisierungsstruktur und/oder Mitnehmerstruktur kann zwischen Band und Transporteinheit angeordnet sein und an der Transporteinheit anstossen bzw. die Transporteinheit kontaktieren.

In einer Ausgestaltung weist das Band als Stabilisierungsstruktur und/oder Mitnehmerstruktur Bürsten auf, welche auf einer Aussenfläche des Bandes angeordnet sind und eingerichtet sind, die Transporteinheit zu stabilisieren und vorteilhafterweise in Förderrichtung mitzubewegen.

In einer weiteren Ausgestaltung weist das Band als Stabilisierungsstruktur und/oder Mitnehmerstruktur Schaumstoffelemente auf, welche auf einer Aussenfläche des Bandes angeordnet sind.

Die Bürsten und/oder Schaumstoffelemente weisen vorzugsweise eine Flexibilität derart auf, dass die Bürsten und/oder Schaumstoffelemente sich an verschiedene Geometrien und/oder Dimensionen der Transporteinheiten anpassen können. Die Bürsten und/oder Schaumstoffelemente können derart ausgebildet sein, dass die Bürsten und/oder Schaumstoffelemente beim Stillstand des Bandes an der Aussenfläche des Bandes anliegen und sich bei einer Bewegung des Bandes über die Rollen von der Aussenfläche des Bandes aufstellen.

Vorzugsweise ist die Führungsvorrichtung derart eingerichtet, dass das Band seitlich der Transporteinheit angeordnet ist und die Bewegung der Transporteinheit in einer horizontalen Richtung begrenzt wird.

In einer Ausgestaltung umfasst die Führungsvorrichtung zwei separate, gegenüberliegend angeordnete Bänder, welche jeweils über mindestens zwei Rollen laufen und eingerichtet sind, die Bewegung der Transporteinheit in beide horizontalen Richtungen quer zur Förderrichtung zu begrenzen.

Die Führungsvorrichtung kann alternativ oder in Ergänzung ein unterhalb der Transporteinheit angeordnetes Band aufweisen, auf welchem die Transporteinheit mindestens teilweise zur Stabilisierung direkt oder indirekt, z.B. über am Band angeordnete Bürsten und/oder Schaumstoffelemente, aufliegen kann.

In einer Ausgestaltung umfasst die Führungsvorrichtung eine Mehrzahl von Begrenzungskörpern, welche als Bürstenrollen ausgebildet sind, wobei mindestens zwei Bürstenrollen aneinander anschliessend angeordnet sind und eine Stabilisierungsfläche und/oder Führungsfläche ausbilden.

In einer Ausgestaltung sind mindestens zwei erste Bürstenrollen auf einer Seite der Zuführstrecke und mindestens zwei zweite Bürstenrollen auf einer gegenüberliegenden Seite der Zuführstrecke derart angeordnet, dass eine Transporteinheit zwischen den gegenüberliegenden Bürstenrollen hindurchführbar und stabilisierbar ist.

Ein Aspekt der Erfindung betrifft weiter eine Messvorrichtung gemäss der vorliegenden Beschreibung für eine Speichervorrichtung zum Einspeichern von Transporteinheiten in eine Mehrzahl von Speicherstrecken, welche eingerichtet ist, jeweils eine Ausdehnung einer Transporteinheit zu ermitteln. Anhand der ermittelten Ausdehnung kann eine Speicherstrecke zum Einspeichern der Transporteinheit ausgewählt werden.

Die Ausdehnung der Transporteinheit kann u.a. vertikal und/oder horizontal quer zur Förderrichtung und/oder längs der Förderrichtung ermittelt werden. Bei Transporteinheiten mit Taschen kann die zu ermittelnde Ausdehnung die Tiefe, Breite und/oder Höhe der Tasche sein.

In einer Ausgestaltung sind in der Steuerung die aktuelle Anzahl der in den jeweiligen Speicherstrecken eingespeicherten Transporteinheiten, die zu den eingespeicherten Transporteinheiten zugehörigen Ausdehnungen in Förderrichtung und die Längen der Speicherstrecken hinterlegbar, wobei die Steuerung eingerichtet ist, die freien Längen der jeweiligen Speicherstrecken aus den Längen der jeweiligen Speicherstrecken, der Anzahl der eingespeicherten Transporteinheiten und den zugehörigen Ausdehnungen in Förderrichtung zu bestimmen, und die ersten Weichen jeweils derart zu steuern, dass die ersten Weichen eine Transporteinheit in eine Speicherstrecke mit einer freien Länge einspeichern, welche grösser oder gleich als die von der Messvorrichtung ermittelte Ausdehnung der Transporteinheit in Förderrichtung ist.

In einer bevorzugten Ausgestaltung gehen die Speicherstrecken als Stiche von der Zuführstrecke ab, wobei die Stiche vorzugsweise rechtwinklig von der Zuführstrecke abgehen.

Durch die Bestimmung der freien Längen der Speicherstrecken kann basierend auf den ermittelten Ausdehnungen der einzuspeichernden Transporteinheiten in Förderrichtung vorteilhafterweise einerseits sichergestellt werden, dass eine Transporteinheit jeweils in eine Speicherstrecke mit ausreichend verfügbarem Platz eingespeichert wird und andererseits verhindert werden, dass ein verfügbarer Platz einer Speicherstrecke nicht ausgenutzt wird.

Vorzugsweise ist die Steuerung ausgelegt, bei jeder Betätigung einer ersten Weiche zum Einspeichern einer Transporteinheit in eine Speicherstrecke die aktuelle Anzahl der in dieser Speicherstrecke eingespeicherten Transporteinheiten zu erfassen bzw. zu aktualisieren. Optional kann auch an den Speicherstrecken oder den ersten Weichen jeweils eine Zählvorrichtung angeordnet sein, welche die in eine Speicherstrecke eingespeicherten Transporteinheiten zählt und die Anzahl an die Steuerung übermittelt. Ferner ist die Steuerung vorzugsweise ausgelegt, für jede übermittelte Ausdehnung von eingespeicherten Transporteinheiten die zugehörige Speicherstrecke, in welche die jeweilige Transporteinheit eingespeichert wurde, zu erfassen, so dass in der Steuerung vorteilhafterweise stets die aktuelle Anzahl Transporteinheiten mit den zugehörigen Ausdehnungen in Förderrichtung hinterlegt ist.

Die Steuerung kann dann auf einfache Weise jeweils aus der hinterlegten Länge einer Speicherstrecke, der aktuellen Anzahl der in dieser Speicherstrecke eingespeicherten Transporteinheiten und den zugehörigen Ausdehnungen in Förderrichtung die freie Länge der Speicherstrecke bestimmen. Vorteilhafterweise kann die Steuerung daher sicherstellen, dass eine einzuspeichernde Transporteinheit in eine Speicherstrecke mit genügend freiem Platz eingespeichert wird, indem die Steuerung die ermittelte Ausdehnung dieser Transporteinheit in Förderrichtung mit den freien Längen der Speicherstrecken vergleicht. Ausserdem kann die Steuerung vorteilhafterweise verhindern, dass Speicherstrecken, welche noch genügend Platz für eine Transporteinheit hätten, über eine längere Zeit unausgelastet bleiben.

Da die Auslastung der Speicherstrecken vorteilhafterweise durch die Ermittlung der Ausdehnung der Transporteinheiten gesteuert werden kann, kann z.B. auf einen Vollstandssensor verzichtet werden, wodurch u.a. Verkabelung eingespart werden kann.

Es besteht daher der Vorteil, dass die Steuerung stets auf einem aktuellen Stand bezüglich dem Füllstand der Speicherstrecken und der einzuspeichernden Transporteinheiten sein kann und das Einspeichern der Transporteinheiten entsprechend optimal steuern kann.

In bestimmten Ausgestaltungen kann die Messvorrichtung eingerichtet sein, die Ausdehnung der Transporteinheiten quer, z.B. waagrecht oder senkrecht, zur Förderrichtung zu ermitteln. Dies ist vorteilhaft, falls z.B. für bestimmte Speicherstrecken aufgrund des Abstandes der Speicherstrecken zueinander etc., eine maximal zulässige Ausdehnung von Transporteinheiten quer zur Förderrichtung vorgesehen ist.

In bestimmten Ausgestaltungen kann mindestens ein Auslastungssensor vorgesehen sein, welcher die aktuellen freien Längen der Speicherstrecken ermittelt und an die Steuerung übermittelt. Die Steuerung kann dann die durch die Messvorrichtung ermittelte Ausdehnung einer Transporteinheit in Förderrichtung mit den aktuellen freien Längen der Speicherstrecken vergleichen und die ersten Weichen derart steuern, dass die ersten Weichen die Transporteinheit in eine Speicherstrecke mit einer freien Länge einspeichern, welche grösser oder gleich als die ermittelte Ausdehnung der Transporteinheit in Förderrichtung ist.

Vorzugsweise ist die Messvorrichtung vor den ersten Weichen angeordnet.

Vorzugsweise ist für alle Speicherstrecken eine gemeinsame Messvorrichtung vorgesehen. Die gemeinsame Messvorrichtung bietet den Vorteil, dass nicht für jede Speicherstrecke eine separate Messvorrichtung bereitgestellt werden muss und der Aufbau der Speichervorrichtung vereinfacht werden kann. Ferner kann die Steuerarchitektur und somit der Steueraufwand reduziert werden, da alle Ausdehnungen durch die gemeinsame Messvorrichtung ermittelt und an die Steuerung übermittelt werden. Weiter kann durch die gemeinsame Messvorrichtung u.a. Verkabelung eingespart werden, was die Kosten für die Bereitstellung der Speichervorrichtung deutlich reduziert. Die Anordnung der Messvorrichtung ist vorteilhafterweise flexibel, da lediglich erforderlich ist, dass die Messvorrichtung vor den Speicherstrecken angeordnet ist.

In einer Ausgestaltung ist die Steuerung eingerichtet, die ersten Weichen jeweils derart zu steuern, dass die ersten Weichen eine Transporteinheit mit einer Ausdehnung in Förderrichtung, welche grösser als die freie Länge einer Speicherstrecke ist, an dieser Speicherstrecke vorbeiführen.

Dadurch kann verhindert werden, dass eine Transporteinheit in eine Speicherstrecke eingespeichert wird, in welcher nicht genügend Platz vorhanden ist, was ferner das Risiko reduziert, dass sich z.B. eine Transporteinheit in einer Weiche verfängt und die Speichervorrichtung dadurch ausfällt.

In einer Ausgestaltung ist die Steuerung eingerichtet, die ersten Weichen jeweils derart zu steuern, dass die ersten Weichen die Transporteinheiten gemäss einem in der Steuerung hinterlegten Speicherplan in die jeweiligen Speicherstrecken einspeichern.

Der Speicherplan kann in einer Ausgestaltung eine Verteilung von Ausdehnungen auf die Speicherstrecken umfassen. Zum Beispiel kann durch den Speicherplan vorgesehen sein, in einer ersten Speicherstrecke Transporteinheiten mit Ausdehnungen in einem ersten Bereich, in einer zweiten Speicherstrecke Transporteinheiten mit Ausdehnungen in einem zweiten Bereich, etc. einzuspeichern.

Weiter kann der Speicherplan eine Verteilung von Ausdehnungen für eine bestimmte Speicherstrecke umfassen. Zum Beispiel kann für eine bestimmte Speicherstrecke vorgesehen sein, dass zuerst Transporteinheiten mit einer grossen Ausdehnung, z.B. mit einer bestimmten Mindestausdehnung, eingespeichert werden und ab einer gewissen Anzahl von eingespeicherten Transporteinheiten nur noch Transporteinheiten mit einer kleinen Ausdehnung, z.B. mit einer bestimmten Maximalausdehnung, eingespeichert werden.

Weiter kann der Speicherplan Anforderungen an die freien Längen der Speicherstrecken umfassen. Zum Beispiel kann durch den Speicherplan vorgesehen sein, dass ab einer bestimmten freien Länge einer Speicherstrecke keine weiteren Transporteinheiten mehr in diese Speicherstrecke eingespeichert werden.

In einer Ausgestaltung umfasst die Speichervorrichtung eine Wegführstrecke, welche über jeweils eine zweite Weiche an die Speicherstrecken angeschlossen ist.

In einer bevorzugten Ausgestaltung sind die Speicherstrecken als Stiche zwischen der Zuführstrecke und der Wegführstrecke angeordnet, wobei die Stiche vorzugsweise rechtwinklig sowohl von der Zuführstrecke als auch von der Wegführstrecke abgehen.

In der Zuführstrecke und/oder der Wegführstrecke und/oder den Speicherstrecken können die Transporteinheiten je nach Ausgestaltung mit veränderlichem oder mit festem Abstand zueinander gefördert werden. Insbesondere können die Zuführstrecke und/oder die Wegführstrecke und/oder die Speicherstrecken als Gravitationsförderstrecken oder als Taktförderstrecken ausgebildet sein.

In einer Ausgestaltung weisen die Speicherstrecken jeweils einen Freigeber zur kontrollierten Freigabe von Transporteinheiten aus der Speicherstrecke heraus auf, welcher mit der Steuerung verbunden ist.

Der Freigeber ist vorzugsweise eingerichtet, durch einen Steuerbefehl der Steuerung eine Transporteinheit aus der Speicherstrecke freizugeben. Durch den Freigeber kann daher ein Transportgut auf kontrollierte Weise aus einer Speicherstrecke abgerufen werden, wenn dieses Transportgut benötigt wird.

In einer Ausgestaltung umfasst der Freigeber eine Barriere, welche quer zur Förderrichtung in den Förderweg der Transporteinheiten wahlweise eingebracht und zurückgezogen werden kann.

In einer Ausgestaltung ist die Steuerung eingerichtet, den Speicherstrecken jeweils einen Ausdehnungsbereich, vorzugsweise gemäss einem in der Steuerung hinterlegten Speicherplan, zuzuordnen und die ersten Weichen jeweils derart zu steuern, dass die ersten Weichen eine Transporteinheit mit einer Ausdehnung, welche im Ausdehnungsbereich einer Speicherstrecke liegt, in diese Speicherstrecke einspeichern.

Dies bietet den Vorteil, dass die Verteilung der Transporteinheiten auf die Speicherstrecken anhand der ermittelten Ausdehnungen besser gesteuert werden kann.

In einer Ausgestaltung ist die Steuerung eingerichtet, den Speicherstrecken jeweils eine Mehrzahl von Ausdehnungsbereichen zuzuordnen und die ersten Weichen jeweils derart zu steuern, dass die ersten Weichen eine Transporteinheit mit einer Ausdehnung, welche in einem der Ausdehnungsbereiche einer Speicherstrecke liegt, in diese Speicherstrecke einspeichern.

Dies bietet den Vorteil, dass die Verteilung der Transporteinheiten für eine Speicherstrecke variabel gestaltet werden kann. Die Mehrzahl von Ausdehnungsbereichen kann in einem Speicherplan, welcher in der Steuerung hinterlegbar ist, festgehalten sein.

In einer Ausgestaltung ist die Steuerung eingerichtet, bei mehreren Speicherstrecken, in welchen eine Transporteinheit aufgrund der ermittelten Ausdehnung einspeicherbar ist, eine Speicherstrecke nach einem in der Steuerung hinterlegten Priorisierungsplan zum Einspeichern der Transporteinheit auszuwählen.

Durch den Priorisierungsplan kann die Steuerung bei einer Mehrzahl von Speicherstrecken, in welche eine Transporteinheit eingespeichert werden kann, eine eindeutige Auswahl treffen.

Alternativ oder in Ergänzung kann die Steuerung bei einer Mehrzahl von Speicherstrecken, in welche eine Transporteinheit eingespeichert werden kann, eine Priorisierung anhand der freien Längen der Speicherstrecken vornehmen, z.B. indem Speicherstrecken zum Einspeichern nach absteigender freier Länge ausgewählt werden.

In einer Ausgestaltung weisen die Transporteinheiten jeweils ein Identifikationselement, vorzugsweise einen Barcode, einen QR-Code, einen RFID Tag o.ä., auf.

Dies bietet den Vorteil, dass die Transporteinheiten identifizierbar sind. Insbesondere können die eindeutigen Identifikationen der Transporteinheiten in der Steuerung hinterlegt und die Transporteinheiten vorzugsweise einzeln verfolgt werden.

In einer Ausgestaltung ist an der Zuführstrecke eine Auslesevorrichtung angeordnet, welche mit der Steuerung verbunden ist und eingerichtet ist, das Identifikationselement einer Transporteinheit auszulesen und die ausgelesene Information an die Steuerung zu übermitteln, wobei die Steuerung vorzugsweise eingerichtet ist, die ausgelesene Information einer ermittelten Ausdehnung der Transporteinheit zuzuordnen.

Auf diese Weise kann in der Steuerung eine ermittelte Ausdehnung mit einer Identifikation einer Transporteinheit verknüpft werden. Die Auslesevorrichtung kann unmittelbar vor oder nach der Messvorrichtung angeordnet sein. Mit "unmittelbar" ist in diesem Zusammenhang gemeint, dass in der Regel nach dem Auslesen durch die Auslesevorrichtung die Ausdehnung derselben Transporteinheit ermittelt wird, oder nach dem Ermitteln der Ausdehnung durch die Messvorrichtung das Identifikationselement derselben Transporteinheit ausgelesen wird. Die Auslesevorrichtung und die Messvorrichtung können auch auf der gleichen Höhe in Bezug auf die Förderrichtung angeordnet sein, z.B. auf gegenüberliegenden Seiten der Zuführstrecke. In einer Ausgestaltung ist die Auslesevorrichtung mit der Messvorrichtung in einer Erfassungseinheit integriert.

Die Auslesevorrichtung kann z.B. einen RFID-Reader, einen Barcode-Reader, einen QR-code-Reader o.ä., umfassen.

In einer Ausgestaltung weisen die Transporteinheiten jeweils eine Trageeinheit, vorzugweise eine Tasche, zum Tragen von Transportgut auf.

Ein Transportgut kann ein Gut oder mehrere Güter umfassen. Der Fachmann versteht unter Taschen allgemein Behältnisse wie z.B. Beutel, Schachteln, Säcke, Umschläge, Körbe etc.

In weiteren Ausgestaltungen können die Trageeinheiten Haken, Kleiderbügel, Rahmen, Transportgestelle, Klammern, Greifer etc. umfassen.

In einer Ausgestaltung umfassen die Transporteinheiten jeweils einen Laufwagen, an welchem die Taschen jeweils befestigbar sind, wobei der Laufwagen vorzugsweise hängend in der Speichervorrichtung förderbar ist.

Die Speichervorrichtung kann mindestens eine Laufschiene umfassen, an welcher die Laufwagen förderbar sind.

Die Erfindung betrifft weiter eine Speicheranlage, umfassend eine Speichervorrichtung gemäss der vorliegenden Beschreibung und eine Aufgabestation, welche an der Zuführstrecke angeordnet ist, und in welcher die Transporteinheiten jeweils mit Transportgut bestückbar sind.

In einer Ausgestaltung der Speicheranlage ist in der Aufgabestation eine zusätzliche Messvorrichtung angeordnet, welche eingerichtet ist, die Ausdehnung der Transporteinheiten nach der Bestückung mit Transportgut zu ermitteln.

Typischerweise sind die Transporteinheiten derart ausgestaltet, dass die Ausdehnung der Transporteinheiten durch das Transportgut, mit welchem die Transporteinheit bestückt wird, bestimmt wird. Es ist daher vorteilhaft, die Ausdehnung der Transporteinheiten nach der Bestückung in der Aufgabestation zu ermitteln.

Falls sich das Transportgut nach der Messung der Ausdehnung durch die zusätzliche Messvorrichtung in der Aufgabestation während der Förderung in der Transporteinheit bewegt und sich dadurch die Ausdehnung der Transporteinheit ändert, z.B. weil ein Transportgut wie ein Paket in einer Tasche kippt, bietet die Messvorrichtung an der Zuführstrecke den Vorteil, dass die durch die zusätzliche Messvorrichtung in der Aufgabestation ermittelte Ausdehnung der Transporteinheit überprüft werden kann. Die Steuerung kann, falls sich die Ausdehnung seit der Messung durch die zusätzliche Messvorrichtung geändert hat, die durch die zusätzliche Messvorrichtung in der Aufgabestation ermittelte Ausdehnung mit der durch die Messvorrichtung an der Zuführstrecke ermittelten Ausdehnung ersetzen.

Die zusätzliche Messvorrichtung in der Aufgabestation umfasst vorzugsweise einen Sensor, welcher ausgelegt ist, die Ausdehnung der Transporteinheiten zu messen. Der Sensor kann in Ausgestaltungen ein optischer Sensor, z.B. eine Kamera, eine Lichtschranke, ein Lichtvorhang, ein Lichttaster o.ä., sein.

In einer Ausgestaltung ist in der Aufgabestation eine zweite Auslesevorrichtung angeordnet.

In der Regel werden die Transporteinheiten nach einem Aufgabeplan, welcher vorzugsweise in der Steuerung hinterlegt ist, mit Transportgütern bestückt. Durch die zweite Auslesevorrichtung kann daher in der Steuerung nach der Bestückung die Information über das Transportgut mit der Identifikation der bestückten Transporteinheit verknüpft werden.

Falls durch eine in der Aufgabestation angeordnete zweite Auslesevorrichtung die Transportgüter bereits zu den Transporteinheiten zugeordnet sind, kann die an der Zuführstrecke angeordnete Auslesevorrichtung der Steuerung eine Information über das Transportgut liefern, welches in der einzuspeichernden Transporteinheit angeordnet ist. Die Information über das spezifische Transportgut in der einzuspeichernden Transporteinheit kann daher zusätzlich zur ermittelten Ausdehnung ein Kriterium zur Auswahl einer Speicherstrecke bereitstellen.

Zum Beispiel könnte in einem Speicherplan festgehalten sein, dass Transportgüter mit Lebensmitteln in einer ersten Speicherstrecke einzuspeichern sind und Transportgüter mit Büchern in einer zweiten Speicherstrecke einzuspeichern sind.

Die Erfindung betrifft weiter ein Verfahren zum Betrieb einer Speichervorrichtung gemäss der vorliegenden Beschreibung, umfassend die Schritte: i) Bereitstellen von mit Transportgütern bestückten Transporteinheiten in der Zuführstrecke; ii) Ermitteln einer Ausdehnung einer Transporteinheit durch die Messvorrichtung; iii) Übermitteln der ermittelten Ausdehnung durch die Messvorrichtung an die Steuerung; iv) Auswählen einer Speicherstrecke zum Einspeichern der Transporteinheit anhand der von der Messvorrichtung ermittelten Ausdehnung der Transporteinheit.

In einer Ausgestaltung umfasst das Verfahren weiter die Schritte: Ermitteln der Ausdehnung einer Transporteinheit in Förderrichtung; Hinterlegen der aktuellen Anzahl der in den jeweiligen Speicherstrecken eingespeicherten Transporteinheiten, der zu den eingespeicherten Transporteinheiten zugehörigen Ausdehnungen in Förderrichtung, und der Längen der Speicherstrecken in der Steuerung; Bestimmen der freien Längen der jeweiligen Speicherstrecken aus den Längen der Speicherstrecken, der Anzahl der eingespeicherten Transporteinheiten und den zugehörigen Ausdehnungen in Förderrichtung durch die Steuerung; Steuern der ersten Weichen durch die Steuerung, derart, dass die ersten Weichen eine Transporteinheit in eine Speicherstrecke mit einer freien Länge einspeichern, welche grösser oder gleich als die von der Messvorrichtung ermittelte Ausdehnung der Transporteinheit in Förderrichtung ist.

In einer Ausgestaltung des Verfahrens steuert die Steuerung die ersten Weichen jeweils derart, dass die ersten Weichen eine Transporteinheit mit einer Ausdehnung in Förderrichtung, welche grösser als die freie Länge einer Speicherstrecke ist, an dieser Speicherstrecke vorbeiführen.

In einer Ausgestaltung des Verfahrens steuert die Steuerung die ersten Weichen jeweils derart, dass die ersten Weichen die Transporteinheiten gemäss einem in der Steuerung hinterlegten Speicherplan in die jeweiligen Speicherstrecken einspeichern.

In einer Ausgestaltung des Verfahrens ordnet die Steuerung den Speicherstrecken jeweils einen Ausdehnungsbereich, vorzugsweise gemäss einem in der Steuerung hinterlegten Speicherplan, zu und steuert die ersten Weichen jeweils derart, dass die ersten Weichen eine Transporteinheit mit einer Ausdehnung, welche im Ausdehnungsbereich einer Speicherstrecke liegt, in diese Speicherstrecke einspeichern.

In einer Ausgestaltung des Verfahrens ordnet die Steuerung den Speicherstrecken jeweils eine Mehrzahl von Ausdehnungsbereichen zuordnet und steuert die ersten Weichen jeweils derart, dass die ersten Weichen eine Transporteinheit mit einer Ausdehnung, welche in einem der Ausdehnungsbereiche einer Speicherstrecke liegt, in diese Speicherstrecke einspeichern.

In einer Ausgestaltung des Verfahrens wählt die Steuerung bei mehreren Speicherstrecken, in welche eine Transporteinheit aufgrund der ermittelten Ausdehnung einspeicherbar ist, eine Speicherstrecke nach einem in der Steuerung hinterlegten Priorisierungsplan zum Einspeichern der Transporteinheit aus.

### LISTE DER FIGUREN

Ausführungsformen der Erfindung werden anhand der nachfolgenden Figuren und der dazugehörigen Beschreibung näher erläutert. Es zeigen:
- Figur 1: eine schematische Darstellung einer Ausführungsform einer Speicheranlage;
- Figur 2a-d: verschiedene Ansichten einer Transporteinheit mit einem Ausschnitt einer Laufschiene;
- Figur 3: eine schematische Darstellung einer Ausführungsform einer Speichervorrichtung;
- Figur 4: eine schematische Darstellung einer Ausführungsform einer Aufgabestation;
- Figur 5: eine perspektivische Ansicht eines Ausschnitts einer Laufschiene mit einem Laufwagen;
- Figur 6: eine Seitenansicht eines Ausschnitts einer Laufschiene mit einer Ausführungsform von Transporteinheiten;
- Figur 7: eine Seitenansicht einer Ausführungsform einer Messvorrichtung;
- Figur 8: eine weitere Ausführungsform einer Messvorrichtung in einer Ansicht von oben;
- Figur 9: eine Seitenansicht einer weiteren Ausführungsform einer Messvorrichtung;
- Figur 10: eine weitere Ausführungsform einer Messvorrichtung in einer Ansicht von oben;
- Figur 11: eine weitere Ausführungsform einer Messvorrichtung in einer Seitenansicht;
- Figur 12: eine weitere Ausführungsform einer Messvorrichtung in einer Ansicht von oben.

### BESCHREIBUNG EXEMPLARISCHER AUSFÜHRUNGSFORMEN

Um die Erfindung zu veranschaulichen, werden bevorzugte Ausführungsformen mit Bezug auf die Figuren näher beschrieben.

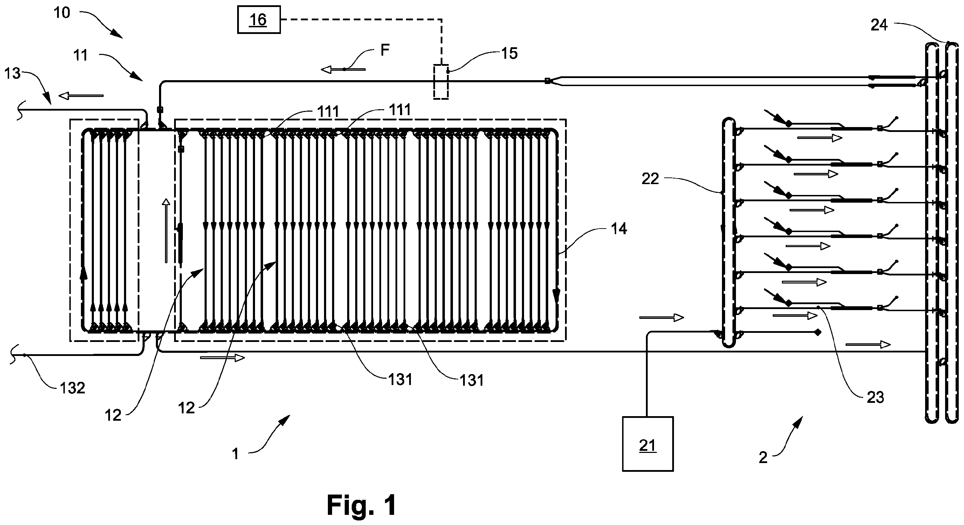

Figur 1 zeigt eine schematische Darstellung einer Ausführungsform einer Speicheranlage 10 umfassend eine Speichervorrichtung 1 und eine Aufgabestation 2. Die Speichervorrichtung 1 umfasst eine Zuführstrecke 11, welche einerseits die Speichervorrichtung 1 mit der Aufgabestation 2 verbindet und andererseits über jeweils erste Weichen 111 an eine Mehrzahl von Speicherstrecken 12 der Speichervorrichtung 1 angeschlossen ist. Die Speicherstrecken 12 gehen als rechtwinklig angeordnete Stiche von der Zuführstrecke 11 ab. Weiter umfasst die Speichervorrichtung 1 eine Wegführstrecke 13, welche über zweite Weichen 131 an die Speicherstrecken 12 angeschlossen ist. Die Speichervorrichtung 1 umfasst eine Mehrzahl von Transporteinheiten, welche in der Zuführstrecke 11, den Speicherstrecken 12 und der Wegführstrecke 13 förderbar sind und in den Speicherstrecken 12 eingespeichert werden können. Die Speicherstrecken 12 sind als Gravitationsstrecken ausgebildet, welche vom Eingang an den ersten Weichen 111 zum Ausgang an den zweiten Weichen 131 ein Gefälle aufweisen, und auf denen sich geförderte Transporteinheiten aufgrund der Schwerkraft selbsttätig vom Eingang zum Ausgang bewegen. Ein Teil der Zuführstrecke 11 und ein Teil der Wegführstrecke 13 sind wiederum Teil eines Umlaufförderers 14, wobei weitere Zuführstrecken (nicht gezeigt in der Figur 1) und Wegführstrecken 132 an den Umlaufförderer 14 angeschlossen sein können. An der Zuführstrecke 11 ist eine Messvorrichtung 15 angeordnet, welche einen Sensor, wie z.B. eine Lichtschranke, umfasst und eingerichtet ist, die Ausdehnung der Transporteinheiten insbesondere in Förderrichtung F zu ermitteln.

Die Speichervorrichtung 1 weist ferner eine Steuerung 16 auf, welche mit der Messvorrichtung 1 5 und den ersten Weichen 111 sowie den zweiten Weichen 131 verbunden ist. Die Verbindung der Steuerung 16 mit der Messvorrichtung 15 ist durch eine gestrichelte Linie symbolisiert. Die Verbindung der Steuerung 16 mit den ersten Weichen 111 sowie den zweiten Weichen 131 ist der besseren Übersichtlichkeit halber nicht dargestellt. Zum Beispiel könnten die ersten Weichen 111 sowie die zweiten Weichen 131 drahtlos mit der Steuerung 16 verbunden sein.

In der Aufgabestation 2 werden die Transporteinheiten mit Transportgütern bestückt. Von einem Leerspeicher 21 werden die Transporteinheiten über einen Umlaufförderer 22 an Aufgabestrecken 23 gefördert, entlang welchen die Transporteinheiten mit Transportgütern bestückt werden. Die Aufgabestrecken 23 sind an den Ausgängen an einen Umlaufförderer 24 angeschlossen, von welchem die bestückten Transporteinheiten auf die Zuführstrecke 11 gelangen.

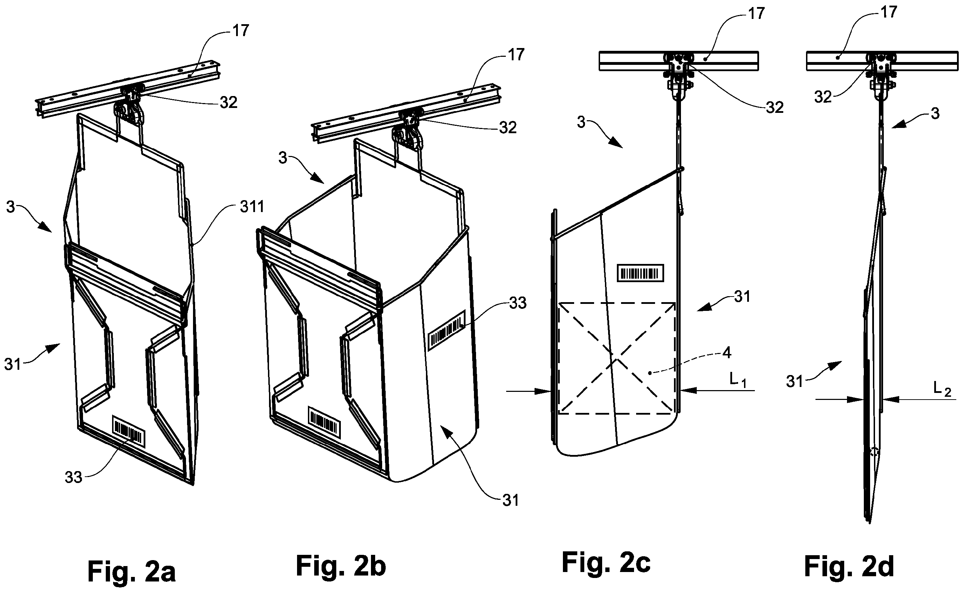

Figur 2a-d zeigt verschiedene Ansichten einer Transporteinheit 3 mit einem Ausschnitt einer Laufschiene 17. Figur 2a zeigt eine perspektivische Ansicht der Transporteinheit 3 in einem leeren Zustand, d.h. ohne Transportgut. Die Transporteinheit 3 umfasst eine als Tasche 31 ausgebildete Trageeinheit zum Tragen von Transportgut. Die Tasche 31 umfasst einen Rahmen 311, welcher derart zusammenklappbar ausgebildet ist, dass die Ausdehnung der Tasche 31 in Förderrichtung je nach Transportgut veränderbar ist. Weiter weist die Transporteinheit 3 einen Laufwagen 32, welche an der Laufschiene 17 förderbar ist und an welchem die Tasche 31 befestigt ist. Die Tasche 31 kann lösbar oder fest am Laufwagen 32 befestigt sein.

Figur 2b zeigt die Transporteinheit 3 aus Figur 2a in einer mit einem Transportgut bestückten Konfiguration. In der gezeigten perspektivischen Ansicht ist das Transportgut nicht sichtbar, da das Transportgut eine Höhe aufweist, welche kleiner als die Höhe der Tasche 31 ist. Im Vergleich zur Konfiguration in Figur 2a ist zu erkennen, dass die Ausdehnung der Tasche 31 in Förderrichtung grösser ist, da die Tasche 31 mit einem Transportgut bestückt ist.

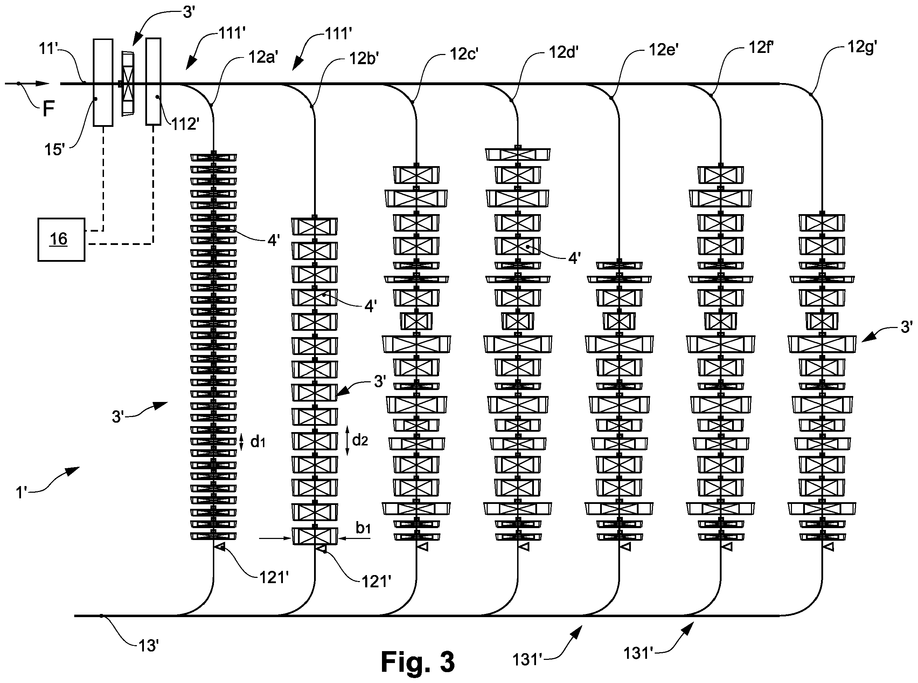

Figur 2c und Figur 2d zeigen die Transporteinheit 3 mit der Tasche 31 mit Transportgut 4 (Figur 2c) und ohne Transportgut 4 (Figur 2d) in einer Seitenansicht. Es ist ersichtlich, dass die Ausdehnung der Transporteinheit 3 in Förderrichtung von der Bestückung der Transporteinheit 3 bzw. der Tasche 31 mit Transportgut 4 abhängt. In den gezeigten Konfigurationen ist die Ausdehnung L1 der mit Transportgut 4 bestückten Transporteinheit 3 grösser als die Ausdehnung L2 der leeren Transporteinheit 3 bzw. Tasche 31. In der in Figur 3d gezeigten Konfiguration der leeren Transporteinheit 3 bzw. Tasche 31 ist ferner zu erkennen, dass die Ausdehnung der Transporteinheit 3 in Förderrichtung sowohl durch die Ausdehnung der Tasche 31 als auch durch die Ausdehnung des Laufwagens 32 bestimmt werden kann, da die Tasche 31 flach zusammengeklappt ist.

An der Tasche 31 sind sowohl an der Front als auch an der Seite als Identifikationselemente Barcodes 33 angebracht, welche mit einer geeigneten Auslesevorrichtung ausgelesen werden können. Die ausgelesene Identifikation kann von der Auslesevorrichtung an die Steuerung übermittelt werden.

Figur 3 zeigt eine schematische Darstellung einer Ausführungsform einer Speichervorrichtung 1' mit einer Zuführstrecke 1 1', einer Mehrzahl von Speicherstrecken 12a'-12g', einer Mehrzahl von mit Transportgütern 4' bestückten Transporteinheiten 3', einer Wegführstrecke 13' und einer Steuerung 16'. Im gezeigten Beispiel umfasst die Speichervorrichtung 1' sieben Speicherstrecken 12a'-12g'. Die Zuführstrecke 11 ' ist über erste Weichen 111 ' an die Speicherstrecken 12a'-12g' angeschlossen. Die Wegführstrecke 13' wiederum ist über zweite Weichen 131' an die Speicherstrecken 12a'-12g' angeschlossen. Vor den ersten Weichen 111' ist an der Zuführstrecke 11' ein gemeinsamer Sensor 15' angeordnet, welcher eingerichtet ist, die Ausdehnung der Transporteinheiten 3' insbesondere in Förderrichtung F zu ermitteln. Die Ausdehnung einer Transporteinheit 3' in Förderrichtung F wird im Wesentlichen durch das jeweilige Transportgut 4' bestimmt. Quer zur Förderrichtung sind die Ausdehnungen der Transporteinheiten 3' auch unterschiedlich, die Ausdehnung wird aber im Wesentlichen durch die Geometrie der Taschen der Transporteinheiten 3' vorgegeben und ist nicht oder nur unwesentlich von den Transportgütern abhängig. Der Sensor 15' übermittelt die Ausdehnung einer Transporteinheit 3' in Förderrichtung F, welche am Sensor 1 5' vorbeigefördert wird, an die Steuerung 16', welche aufgrund der ermittelten Ausdehnung eine Speicherstrecke auswählt, welche eine freie Länge aufweist, welche grösser oder gleich der ermittelten Ausdehnung der Transporteinheit 3' in Förderrichtung F ist. Der Sensor 15' kann auch die Ausdehnung einer Transporteinheit 3' quer zur Förderrichtung F ermitteln und an die Steuerung 16' übermitteln.

Die freien Längen der Speicherstrecken 12a'-12g' werden von der Steuerung 16' aus der Länge der jeweiligen Speicherstrecken 12a'-12g', der Anzahl von in den jeweiligen Speicherstrecken 12a'-12g' eingespeicherten Transporteinheiten 3' und den dazugehörigen Ausdehnungen in Förderrichtung bestimmt und laufend aktualisiert. In der in Figur 3 gezeigten Momentaufnahme weist die Speicherstrecke 12e' die grösste freie Länge auf und die Speicherstrecken 12a' und 12d' weisen die kleinsten freien Längen auf. In der Steuerung 16' ist weiter ein Speicherplan hinterlegt, welcher als weiteres Kriterium zur Auswahl einer Speicherstrecke Typen von Transporteinheiten 3' enthält. Im gezeigten Beispiel ist im Speicherplan das Kriterium enthalten, dass in der ersten Speicherstrecke 1 2a' nur dünne Transporteinheiten 3a' mit einer Ausdehnung in Förderrichtung kleiner oder kleiner gleich als d1 eingespeichert werden sollen. In der zweiten Speicherstrecke 1 2b' sollen hingegen dickere Transporteinheiten 3b' mit einer Ausdehnung in Förderrichtung grösser als d1 aber kleiner oder kleiner gleich als d2 eingespeichert werden. Ausserdem enthält der Speicherplan ein weiteres Kriterium, dass die in die ersten zwei Speicherstrecken 1 2a' und 1 2b' nur Transporteinheiten 3a', 3b' mit einer Ausdehnung quer zur Förderrichtung kleiner als b1 eingespeichert werden sollen. Die weiteren Speicherstrecken 12c'-12g' sind gemischte Speicherstrecken, für welche keine weiteren spezifischen Kriterien im Speicherplan enthalten sind und welche allein aufgrund des Vergleichs der freien Länge mit der der ermittelten Ausdehnung einer Transporteinheit 3' in Förderrichtung ausgewählt werden.

Bei mehreren Speicherstrecken, in welche die Transporteinheiten 3' aufgrund einer ausreichenden freien Länge der Speicherstrecken eingespeichert werden können, ist in der Steuerung 16' ein Priorisierungsplan hinterlegt, welche die Reihenfolge der auszuwählenden Speicherstrecken festlegt.

Vor den zweiten Weichen 131' ist an jeder Speicherstrecke 1 2a'-1 2g' ein Freigeber 121' zur kontrollierten Freigabe von Transporteinheiten 3' angeordnet. Der Freigeber 121' ist mit der Steuerung 16' verbunden und eingerichtet, durch einen Steuerbefehl von der Steuerung 16' eine Transporteinheit 3' aus der Speicherstrecke 12a'-12g' freizugeben, z.B. wenn ein bestimmtes Transportgut 4' benötigt wird.

An der Zuführstrecke 11' ist ferner unmittelbar nach dem Sensor 1 5' eine Auslesevorrichtung 112' in Form eines Barcode-Readers angeordnet, welche eingerichtet ist, ein Identifikationselement einer Transporteinheiten 3' auszulesen und die ausgelesene Identifikation an die Steuerung 16' zu übermitteln. Die Steuerung 16' ordnet die ausgelesene Identifikation der ermittelten Ausdehnung der Transporteinheit 3' zu. In der Figur 3 ist in der Zuführstrecke 11' eine Transporteinheit 3' gezeigt, welche sich zwischen dem Sensor 15' und der Auslesevorrichtung 112' befindet, d.h. nach der Ermittlung der Ausdehnung und vor dem Auslesen des Identifikationselements.

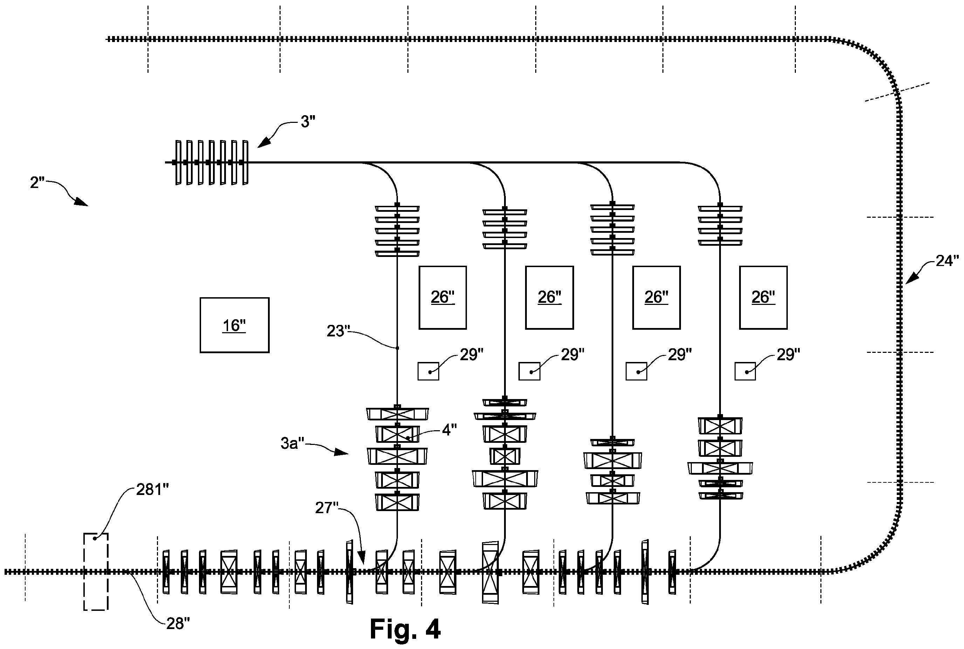

Figur 4 zeigt eine schematische Darstellung einer Ausführungsform einer Aufgabestation 2". Von einem Leerspeicher werden leere Transporteinheiten 3" der Aufgabestation zugeführt. Die Aufgabestation 2" umfasst vier Aufgabestrecken 23", an welchen jeweils eine Aufgabevorrichtung 26" angeordnet ist, mittels welchen die Transporteinheiten 3" mit Transportgut 4" bestückt werden können. Die mit Transportgut 4" bestückten Transporteinheiten 3a" werden über Weichen 27" direkt auf eine Zuführstrecke der Speichervorrichtung oder auf eine mit der Zuführstrecke der Speichervorrichtung verbundene Anschlussstrecke 28" eingeschleust. Die gezeigte Anschlussstrecke 28" ist Teil eines Umlaufförderers 24", welcher als Taktförderer ausgebildet ist. An den Aufgabestrecken 23" ist nach den Aufgabevorrichtungen 26" jeweils eine Auslesevorrichtung 29" angeordnet, welche die Identifikationselemente der Transporteinheiten 3a" ausliest und die ausgelesene Identifikation an die Steuerung 16" übermittelt. In der Steuerung 16" ist zudem Information über die Transportgüter 4", mit welchen die Transporteinheiten 3a" bestückt wurden, hinterlegt. Diese Information über die Transportgüter 4" kann z.B. durch die Aufgabevorrichtungen 26" an die Steuerung 16" übermittelt werden. Durch die Identifikation der Transporteinheiten 3a" kann die Steuerung 16" die Transporteinheiten 3a" zu den Transportgütern 4", mit welchen die Transporteinheiten 3a" bestückt sind, zuordnen. An der Anschlussstrecke 28" ist ferner eine zweite Messvorrichtung 281" angeordnet, welche eingerichtet ist, die Ausdehnung der Transporteinheiten 3a" zu ermitteln und der Steuerung 16" zu übermitteln.

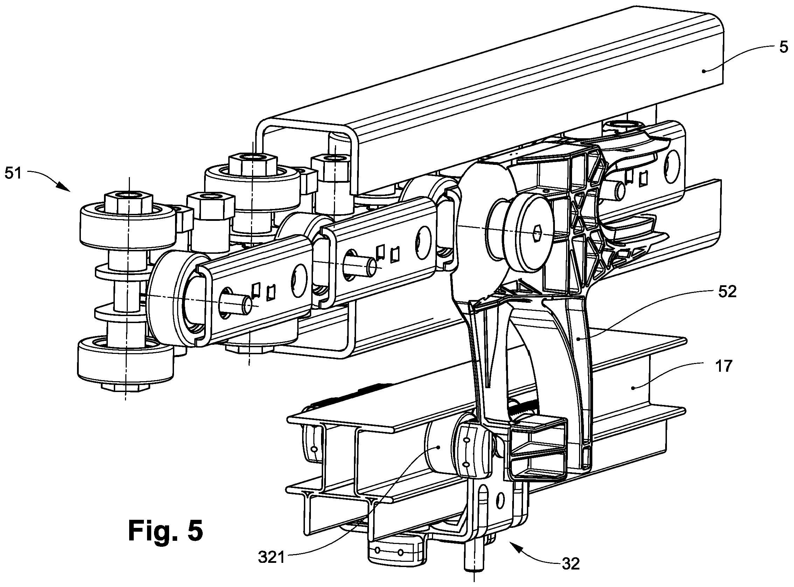

Figur 5 zeigt eine perspektivische Ansicht eines Ausschnitts einer Laufschiene 17 mit einem Laufwagen 32. Der Laufwagen 32 ist über Rollen 321 in der Laufschiene 17 gelagert. Neben der Laufschiene 17 ist eine zweite Schiene 5 angeordnet, in welcher eine Förderkette 51 geführt wird. Die Förderkette 51 steht über nach unten aus der zweiten Schiene 5 herausstehende Mitnehmer 52 mit dem Laufwagen 32 in Eingriff, so dass eine fördernde Bewegung der Förderkette 51 eine entsprechende Bewegung der in Eingriff stehenden Laufwagen 32 bewirkt. Bestimmte Abschnitte der Laufschiene 17 können auch ohne eine zweite Schiene ausgebildet sein, so dass die Laufwagen 32 in diesen Abschnitten frei beweglich sind und z.B. durch Schwerkraft gefördert werden können.

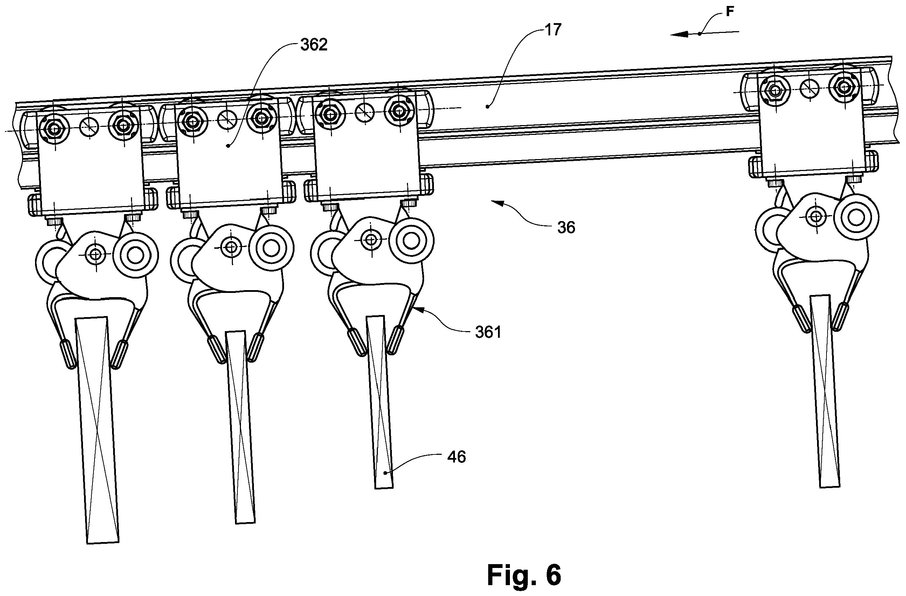

Figur 6 zeigt eine Seitenansicht eines Ausschnitts einer Laufschiene 17 mit einer Ausführungsform von Transporteinheiten 36, welche hängend in der Laufschiene 17 förderbar sind. Die Transporteinheiten 36 umfassen jeweils einen Laufwagen 362, welcher über Rollen in der Laufschiene 17 gelagert sind. Die Laufwagen 362 sind, z.B. durch Schwerkraft, mit veränderlichem Abstand zueinander in der Laufschiene 17 in Förderrichtung F förderbar. Der gezeigte Ausschnitt kann ein Ausschnitt einer Zuführstrecke, einer Wegführstrecke oder einer Speicherstrecke darstellen. Die Transporteinheiten 36 umfassen jeweils eine als Greifer 361 ausgebildete Trageeinheit, welche eingerichtet sind, Transportgut 46, z.B. Druckprodukte wie Bücher oder Zeitschriften, Schachteln, Pakete, Verpackungen o.ä., zu greifen. In der gezeigten Ausführungsform ist die Ausdehnung der Transporteinheiten 36 quer, bzw. im gezeigten Fall waagrecht, zur Förderrichtung F durch die Breite der Transportgüter 46 bestimmt, wobei die Ausdehnung der Transporteinheiten 36 in Förderrichtung F im Wesentlichen durch die Dimensionen der Laufwagen 362 und/oder der Greifer 361 bestimmt wird. Bei als Taschen ausgebildeten Trageeinheiten wird die Ausdehnung der Transporteinheiten in Förderrichtung hingegen typischerweise durch die Dimensionen des Transportguts bestimmt, wobei die Ausdehnung quer zur Förderrichtung in der Regel durch die Dimensionen bzw. die Breite der Taschen vorgegeben ist. In der Figur 6 ist ferner ersichtlich, dass die Transportgüter 46 unterschiedliche Höhen aufweisen, welche durch einen Lichttaster der Messvorrichtung ermittelt werden können.

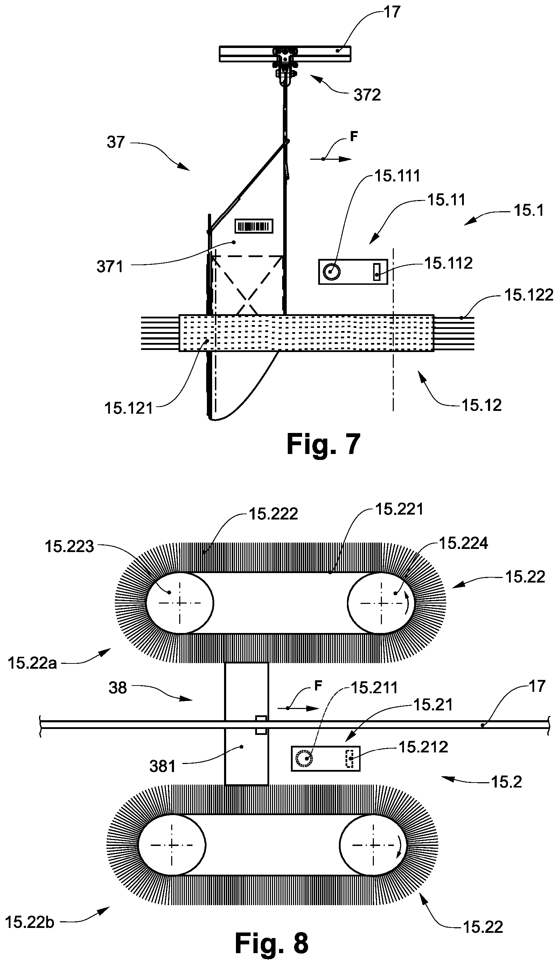

Figur 7 zeigt eine Seitenansicht einer Ausführungsform einer Messvorrichtung 15.1 umfassend einen optischen Sensor 15.11 und eine Führungsvorrichtung 15.12. Der optische Sensor 15.11 ist als Reflexionslichttaster ausgebildet und umfasst eine Lichtquelle 15.111, z.B. eine LED oder ein Laser, und eine Detektionseinheit 15.112, mit z.B. einer CCD (charge coupled device) oder einem CMOS (complementary metal-oxide-semiconductor) Detektor. Der Reflexionslichttaster 15.11 ist eingerichtet, die Ausdehnung einer Transporteinheit 37 in Förderrichtung F beim Vorbeibewegen am Reflexionslichttaster 15.11 zu ermitteln. Der Reflexionslichttaster 15.11 ist seitlich zur Transporteinheit 37 angeordnet. Die Transporteinheit 37 umfasst eine Tasche 371 und einen Laufwagen 372, welche in einer Laufschiene 17 geführt ist. Die Führungsvorrichtung 15.12 ist seitlich an der Zuführstrecke angeordnet und eingerichtet, die Transporteinheit 37 bei der Messung der Ausdehnung durch den Reflexionslichttaster 15.11 zu stabilisieren. Durch die seitliche Anordnung zur Tasche 371 stabilisiert die Führungsvorrichtung 15.12 die Transporteinheit 37 primär quer zur Förderrichtung F. Die Führungsvorrichtung 15.12 umfasst dazu als Begrenzungskörper ein über Rollen laufendes Band 15.121, an dessen Aussenfläche Bürsten 15.122 angeordnet sind. Das Band 15.121 stabilisiert die Tasche 371 über die Bürsten 15.122, welche seitlich an die Tasche 371 anstossen. Die Bürsten 15.121 dienen somit als Stabilisierungsstruktur der Führungsvorrichtung 15.12.

Figur 8 zeigt eine weitere Ausführungsform einer Messvorrichtung 15.2 in einer Ansicht von oben. Die Messvorrichtung 15.2 umfasst einen optischen Sensor 15.21, welcher als Reflexionslichttaster mit einer Lichtquelle 15.211 und Detektionseinheit 15.212 ausgebildet ist und so angeordnet, dass sich eine Tasche 381 einer Transporteinheit 38 unterhalb des Reflexionslichttasters 15.21 vorbeibewegt. In der Draufsicht der Figur 8 sind die Lichtquelle 15.211 und die Detektionseinheit 15.212 entsprechend nur gestrichelt angedeutet. Der Reflexionslichttaster 15.21 ist eingerichtet, die Ausdehnung der Transporteinheit 38 bzw. der Tasche 381 in Förderrichtung F beim Vorbeibewegen am Reflexionslichttaster 15.21 zu ermitteln.

Die Messvorrichtung 15.2 umfasst weiter eine Führungsvorrichtung 15.22 mit zwei Begrenzungskörpern 15.22a und 15.22b, welche einander gegenüberliegend seitlich der Zuführstrecke bzw. der Laufschiene 17 angeordnet sind. Die Begrenzungskörper 15.22a und 15.22b umfassen jeweils ein über zwei Rollen 15.223 und 15.224 laufendes Band 15.221, an dessen Aussenfläche Bürsten 15.222 angeordnet sind. Zur besseren Übersicht sind in Figur 8 nur die Rollen 15.223 und 15.224 sowie Band 15.221 und Bürsten 15.222 des Begrenzungskörpers 15.22a mit Bezugszeichen versehen und beim Begrenzungskörper 15.22b, welcher analog ausgestaltet ist, weggelassen. Mindestens einer der Rollen 15.223 und 1 5.224 kann durch einen Antrieb angetrieben sein. Alternativ können die Rollen 1 5.223 und 1 5.224 antriebsfrei gelagert sein. Die Begrenzungskörper 15.22a und 1 5.22b sind derart seitlich zur Zuführstrecke angeordnet, dass primär die Bewegung der Transporteinheit 38 in beide horizontale Richtungen quer zur Förderrichtung F begrenzt wird. Dadurch können z.B. seitliche Schwingbewegungen der Tasche 381, welche die Genauigkeit der Messung der Ausdehnung der Transporteinheit 38 bzw. der Tasche 381 beeinträchtigen können, minimiert werden. Die Bürsten 15.222 sind senkrecht zur Aussenfläche des Bandes 15.221 aufgestellt und wirken als Stabilisierungsstruktur für die Tasche 381. Bei angetriebenen Rollen 15.233 und/oder 15.224 kann durch Bewegung des Bandes 15.221 mittels den Rollen 1 5.223 und 1 5.224 die Transporteinheit 38 über den Kontakt mit den Bürsten 1 5.222 zusätzlich zur Stabilisierung in Förderrichtung F mitbewegt werden. Die Bürsten 15.222 dienen daher auch als Mitnehmerstruktur der Führungsvorrichtung 15.22.

In Figur 8 stimmt die Ausdehnung der Transporteinheit 38 quer zur Förderrichtung F mit dem Abstand zwischen den Bürsten 1 5.222 der Begrenzungskörper 1 5.22a und 15.22b überein. Bei grösseren Ausdehnungen der Transporteinheit 38 quer zur Förderrichtung F können die Bürsten entsprechend verformt bzw. gebogen werden, so dass weiterhin eine geeignete Stabilisierung gewährleistet ist.

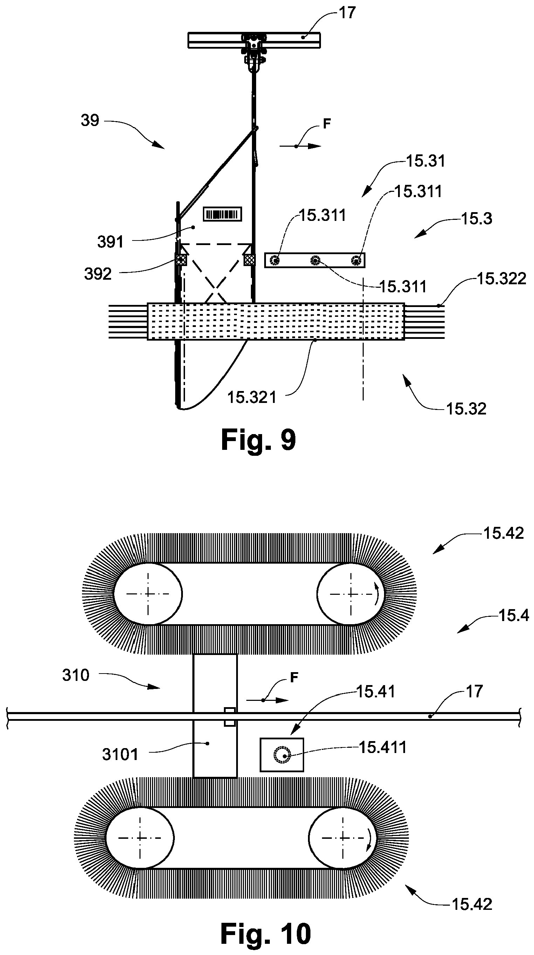

Figur 9 zeigt eine Seitenansicht einer weiteren Ausführungsform einer Messvorrichtung 15.3. Die Messvorrichtung 15.3 umfasst einen optischen Sensor 1 5.31, welcher als Reflexionslichtschranke mit drei Lichtquellen 15.311 ausgebildet ist. Eine an der Messvorrichtung 15.3 vorbeigeförderte Transporteinheit 39 weist an der Tasche 391 Reflektoren 392 auf, an welchen das von den Lichtquellen 15.311 ausgesandte Licht reflektiert wird und wieder von einer Detektionseinheit des optischen Sensors 15.31 (nicht gezeigt in der Figur 9) empfangen wird. Durch die Mehrzahl von Lichtquellen 15.311 wird ein Lichtvorhang gebildet, wodurch eine präzisere Messung der Ausdehnung der Transporteinheit 39 bzw. der Tasche 391 in Förderrichtung F ermöglicht wird. In der in Figur 9 gezeigten Anordnung ist die Reflexionslichtschranke 15.31 derart angeordnet, dass das von den Lichtquellen 15.311 ausgesandte Licht in die Zeichenebene hinein ausgestrahlt wird und die Tasche 391 in Bezug auf die Zeichenebene hinter der Reflexionslichtschranke 15.31 vorbeigefördert wird. Entsprechend sind die Lichtquellen 15.311 nur gestrichelt angedeutet.

Die Messvorrichtung 1 5.3 weist weiter eine Führungsvorrichtung 1 5.32 auf, welche der Führungsvorrichtung 15.12 aus der Figur 7 entspricht und ein über Rollen laufendes Band 15.321, an dessen Aussenfläche Bürsten 1 5.322 angeordnet sind.

Figur 10 zeigt eine weitere Ausführungsform einer Messvorrichtung 15.4 in einer Ansicht von oben. Die Messvorrichtung 1 5.4 ist im Wesentlichen der Messvorrichtung 15.2 aus Figur 8 entsprechend ausgebildet, weist aber als optischen Sensor 15.41 eine Kamera mit einem Kameraobjektiv 1 5.411 auf, welche derart angeordnet ist, dass sich eine Tasche 3101 einer die Messvorrichtung 15.4 passierenden Transporteinheit 310 unterhalb des Kameraobjektivs 15.411 vorbeibewegt. In der Draufsicht der Figur 10 ist das Kameraobjektiv 15.411 entsprechend nur gestrichelt angedeutet. Die Kamera 1 5.41 nimmt ein fotografisches Bild der sich vorbeibewegenden Tasche 3101 auf, welche von einer Auswerteeinheit der Messvorrichtung 15.4 zur Ermittlung der Ausdehnung der Tasche 3101 in Förderrichtung F ausgewertet wird. Die Messvorrichtung 15.4 weist weiter eine Führungsvorrichtung 15.42 auf, welche der Führungsvorrichtung 15.22 aus Figur 8 entsprechend ausgebildet ist.

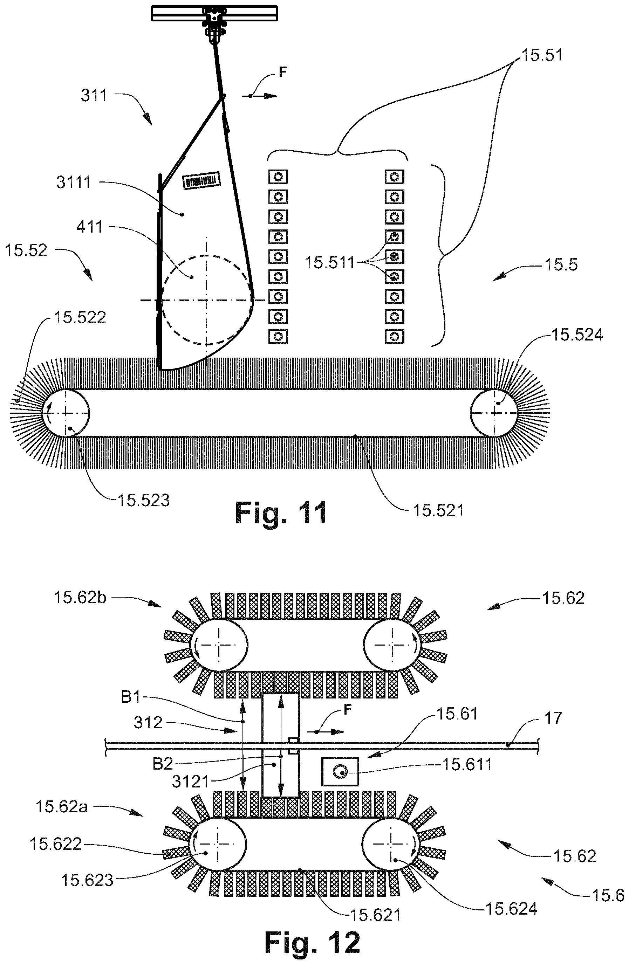

Figur 11 zeigt eine weitere Ausführungsform einer Messvorrichtung 15.5 in einer Seitenansicht. Die Messvorrichtung 15.5 umfasst eine Mehrzahl von optischen Sensoren 15.51, welche als Lichtschranken mit Lichtquellen 15.511 ausgebildet sind und in zwei in Förderrichtung F hintereinander angeordneten vertikalen Linien angeordnet sind. Innerhalb jeder Linie sind eine Mehrzahl von Lichtschranken 15.51 vertikal übereinander angeordnet. Die Lichtschranken 15.51 mit den Lichtquellen 15.511 bilden somit eine Matrix mit zwei Spalten und neun Zeilen bzw. zwei in Förderrichtung F hintereinander angeordnete Lichtvorhänge aus. Durch diese Anordnung kann die Ausdehnung der Tasche 3111 derTransporteinheit 311 auf unterschiedlichen Höhen ermittelt werden und der aufgrund der Form des Transportguts 411 entlang der vertikalen Richtung variierenden Ausdehnung der Tasche 3111 in Förderrichtung Rechnung getragen werden.

Die Messvorrichtung 15.5 weist weiter eine Führungsvorrichtung 15.52 auf, welche ein unterhalb der Transporteinheit 311 angeordnetes Band 15.521 umfasst. Die Transporteinheit 311 liegt indirekt über an der Aussenfläche des Bandes 15.521 angeordnete Bürsten 15.522 auf dem Band 15.521 auf. Das Band 15.521 ist freilaufend über Rollen 15.523 und 15.524 gelagert, so dass das Band 15.521 mit der Transporteinheit 311 mitläuft und die Tasche 3111 bei der Ermittlung der Ausdehnung der Transporteinheit 311 bzw. der Tasche 3111 stabilisiert.

Figur 12 zeigt eine weitere Ausführungsform einer Messvorrichtung 15.6 mit einem optischen Sensor 15.61, welcher, wie bei der Ausführungsform der Figur 10, eine Kamera mit einem Kameraobjektiv 15.611 aufweist. Die Messvorrichtung 15.6 weist weiter eine Führungsvorrichtung 1 5.62 mit zwei Begrenzungskörpern 15.62a und 15.62b auf, welche einander gegenüberliegend seitlich der Zuführstrecke bzw. der Laufschiene 17 angeordnet sind. Die Begrenzungskörper 15.62a und 15.62b umfassen jeweils ein über zwei Rollen 15.623 und 15.624 laufendes Band 15.621 auf.

Im Unterschied zur Ausführungsform der Figur 10 sind an der Aussenfläche des Bandes 15.621 Schaumstoffelemente 15.622 angeordnet, welche als Stabilisierungsstruktur dienen. Zur besseren Übersicht sind in Figur 12 nur die Rollen 15.623 und 15.624 sowie Band 15.621 und Schaumstoffelemente 15.622 des Begrenzungskörpers 1 5.62a mit Bezugszeichen versehen und beim Begrenzungskörper 15.62b, welcher analog ausgestaltet ist, weggelassen. Mindestens einer der Rollen 15.623 und 15.624 kann durch einen Antrieb angetrieben sein. Alternativ können die Rollen 1 5.623 und 15.624 antriebsfrei gelagert sein. Bei über einen Antrieb angetriebenen Rollen 15.623 und/oder 15.624 können die Schaumstoffelemente 15.622 auch als Mitnehmerstruktur der Führungsvorrichtung 15.62 zur Förderung der Transporteinheit 312 dienen. Wie in der Figur 12 ersichtlich, ist die Breite B2 der Tasche 3121 grösser als der freie Abstand B1 zwischen den Schaumstoffelementen 15.622 des ersten Begrenzungskörpers 15.62a und des zweiten Begrenzungskörpers 15.62b. Aufgrund der Flexibilität der Schaumstoffelemente 15.622 können sich die Schaumstoffelemente 15.622 an die Breite B2 der Tasche 3121 anpassen und die Transporteinheit 312 bzw. die Tasche 3121 stabilisieren.

## Patentansprüche

1. Speichervorrichtung (1, 1') zum Einspeichern von Transporteinheiten (3, 3', 3", 3a", 36), umfassend eine Mehrzahl von Transporteinheiten (3, 3', 3", 3a", 36), eine Mehrzahl von Speicherstrecken (12, 1 2a'-1 2g') welche eingerichtet sind hängende Transporteinheiten (3, 3', 3", 3a", 36-39, 310-31 2) zu speichern, eine Zuführstrecke (11,11') und/oder eine Wegführstrecke (13,13') in der die Transporteinheiten (3, 3', 3", 3a", 36) mit veränderlichem oder mit festem Abstand zueinander förderbar sind, wobei die Speichervorrichtung (1, 1') zudem eine Führungsvorrichtung (15.12-15.62) umfasst, die eingerichtet ist die Transporteinheiten (3, 3', 3", 3a", 36-39, 310-31 2) zu stabilisieren, wobei durch die Stabilisierung der Transporteinheiten (3, 3', 3", 3a", 36-39, 310-312) diese in einer Bewegung durch die Führungsvorrichtung (15.12-15.62) dämpfbar sind, wobei die Führungsvorrichtung (1 5.1 2-1 5.62) mindestens einen Begrenzungskörper (1 5.22a, 15 1 5.22b, 1 5.62a, 15.62b) umfasst, welcher eingerichtet ist, eine Bewegung der Transporteinheiten (3, 3', 3", 3a", 36-39, 310-312), vorzugsweise eine Schwingbewegung, horizontal quer oder längs zur Förderrichtung (F), zu begrenzen.

2. Speichervorrichtung (1, 1') nach Anspruch 1, **dadurch gekennzeichnet, dass** die Führungsvorrichtung (15.12-1 5.62) zwei Begrenzungskörper (1 5.22a, 15 1 5.22b, 1 5.62a, 1 5.62b) umfasst, welche einander gegenüberliegend angeordnet und eingerichtet sind, die Bewegung der Transporteinheiten (3, 3', 3", 3a", 36-39, 310-312) in beide horizontale Richtungen quer zur Förderrichtung (F) zu begrenzen.

3. Speichervorrichtung (1, 1') nach Anspruch 2, **dadurch gekennzeichnet, dass** die Begrenzungskörper (15.22a, 15 15.22b, 15.62a, 15.62b) ein über mindestens zwei Rollen (15.223, 15.224, 15.523, 15.524, 15.623, 15.624) umlaufendes Band (15.121, 15.221, 15.321, 15.521, 15.621) umfassen, welches eingerichtet ist eine Bewegung der Transporteinheiten (3, 3', 3", 3a", 36-39, 310-312) quer zum Band (15.121, 15.221, 15.321, 15.521, 15.621) zu begrenzen.

4. Speichervorrichtung (1, 1') nach Anspruch 3, **dadurch gekennzeichnet, dass** das Band (15.121, 15.221, 15.321, 15.521, 15.621) eine Stabilisierungsstruktur und/oder eine Mitnehmerstruktur aufweist, welche Stabilisierungsstruktur und/oder Mitnehmerstruktur zwischen Band (15.121, 15.221, 15.321, 15.521, 15.621) und Transporteinheiten (3, 3', 3", 3a", 36-39, 310-312) angeordnet ist und an den Transporteinheiten (3, 3', 3", 3a", 36-39, 310-312) anstösst, bzw. die Transporteinheiten (3, 3', 3", 3a", 36-39, 310-31 2) kontaktiert.

5. Speichervorrichtung (1, 1') nach Anspruch 4, **dadurch gekennzeichnet, dass** das Band (15.121, 15.221, 15.321, 15.521, 15.621) als Stabilisierungsstruktur und/oder Mitnehmerstruktur Bürsten (15.122, 5 15.222, 15.322, 15.522) aufweist, welche auf einer Aussenfläche des Bandes (15.121, 15.221, 15.321, 15.521, 15.621) angeordnet sind und eingerichtet sind, die Transporteinheiten (3, 3', 3", 3a", 36-39, 310-312) zu stabilisieren und vorteilhafterweise in Förderrichtung (F) mitzubewegen.

6. Speichervorrichtung (1, 1') nach einem der Ansprüche 4, **dadurch gekennzeichnet, dass** das Band (15.121, 15.221, 15.321, 15.521, 15.621) als Stabilisierungsstruktur und/oder Mitnehmerstruktur Schaumstoffelemente (15.622) aufweist, welche auf einer Aussenfläche des Bandes (15.121, 15.221, 15.321, 15.521, 15.621) angeordnet sind.

7. Speichervorrichtung (1, 1') nach einem der Ansprüche 5 oder 6, **dadurch gekennzeichnet, dass** die Bürsten (15.122, 5 15.222, 1 5.322, 15.522) und/oder Schaumstoffelemente (15.622) eine derartige Flexibilität aufweisen, dass die Bürsten (15.122, 5 15.222, 15.322, 15.522) und/oder Schaumstoffelemente (15.622) an verschiedene Geometrien und/oder Dimensionen der Transporteinheiten (3, 3', 3", 3a", 36-39, 310-312) anpassbar sind.

8. Speichervorrichtung (1, 1') nach einem der Ansprüche 5 bis 7, **dadurch gekennzeichnet, dass** die Bürsten (15.122, 5 15.222, 1 5.322, 15.522) und/oder Schaumstoffelemente (15.622) derart ausgebildet sind, dass die Bürsten (15.122, 5 15.222, 15.322, 15.522) und/oder Schaumstoffelemente (15.622) beim Stillstand des Bandes (15.121, 15.221, 15.321, 15.521, 15.621 ) an der Aussenfläche des Bandes (15.121, 15.221, 15.321, 1 5.521, 15.621 )anliegen und sich bei einer Bewegung des Bandes (15.121, 15.221, 15.321, 15.521, 15.621) über die Rollen (15.623, 15.624) von der Aussenfläche des Bandes aufstellen.

9. Speichervorrichtung (1, 1') nach einem der vorangehenden Ansprüche, **dadurch gekennzeichnet, dass** die Führungsvorrichtung (15.12-15.62) zwei separate, gegenüberliegend angeordnete Bänder (15.22, 15.42, 15.62) umfasst, welche jeweils über mindestens zwei Rollen (15.223, 15.224, 15.623, 15.624) laufen und eingerichtet sind, die Bewegung der Transporteinheiten (3, 3', 3", 3a", 36-39, 310-31 2) in beide horizontalen Richtungen quer zur Förderrichtung zu begrenzen.

10. Speichervorrichtung (1, 1') nach einem der vorangehenden Ansprüche, **dadurch gekennzeichnet, dass** die Führungsvorrichtung (15.12-15.62) ein unterhalb der Transporteinheiten (3, 3', 3", 3a", 36-39, 310-312) angeordnetes Band (15.121, 15.221, 15.321, 15.521, 15.621) aufweisen, auf welchem die Transporteinheiten (3, 3', 3", 3a", 36-39, 310-31 2) mindestens teilweise zur Stabilisierung direkt oder indirekt über am Band (15.121, 15.221, 15.321, 15.521, 15.621) angeordnete Bürsten (15.122, 5 15.222, 15.322, 15.522) und/oder Schaumstoffelemente (15.622) aufliegt.

11. Speichervorrichtung (1, 1') nach einem der vorangehenden Ansprüche, **dadurch gekennzeichnet, dass** die Führungsvorrichtung (1 5.1 2-1 5.62) einen Antrieb umfasst, welcher eingerichtet ist, die Führungsvorrichtung (15.12-1 5.62) zum Mitbewegen der Transporteinheiten (3, 3', 3", 3a", 36-39, 310-31 2) anzutreiben.

12. Speichervorrichtung (1, 1') nach einem der vorangehenden Ansprüche, **dadurch gekennzeichnet, dass** die Führungsvorrichtung (1 5.1 2-1 5.62) eine Mehrzahl von Begrenzungskörpern (15.22a, 15.22b, 15.62a, 15.62b) aufweist, welche als Bürstenrollen ausgebildet sind, wobei mindestens zwei Bürstenrollen aneinander anschliessend angeordnet sind und eine Stabilisierungsfläche und/oder Führungsfläche ausbilden.
